# EUROPEAN PATENT APPLICATION

(11) **EP 4 749 843 A1**
(43) Date of publication of application: **27.05.2026**
(21) Application number: 23941239.8
(22) Date of filing: 25.09.2023
(51) Int. Cl.: H02B 1/052, H02B 1/20, H02B 1/48, H02B 1/46, H01R 12/71, H02J 13/00

(54) **INTELLIGENT DISTRIBUTION BOX AND SIGNAL TRANSMISSION METHOD**

(30) Priority: 14.06.2023 CN 202310699315
(71) Applicant: Tianjin JMT Electric Co., Ltd, Tianjin 301699 (CN)
(72) Inventor: WANG, Kecheng, Tianjin 301699 (CN); ZHAO, Wei, Tianjin 301699 (CN)
(74) Representative: Scholl, Matthias
(86) International application number: PCT/CN2023/120914
(87) International publication number: WO 2024/255014

(57) **Abstract**

The present invention provides an intelligent distribution box and a signal transmission method. The intelligent distribution box comprises multiple electrical devices, the electrical devices at least comprising a common power supply module, a main input intelligent circuit breaker, at least one branch intelligent circuit breaker, a central processing unit, and a standard guide rail. The intelligent distribution box is characterized by comprising: at least one PCB circuit board, mounted in a groove of the standard guide rail and embedded with multiple printed parallel wires used to realize parallel connection between circuits and/or data lines between the electrical devices; an elastic contact piece, used to place the electrical devices in communication with the printed parallel wires on the PCB circuit board; an open groove, located on a guide rail groove in which each electrical device is connected to the standard guide rail; and processors, mounted in each electrical device. Beneficial effects of the present invention are: a new structure of each electrical device comprising a circuit breaker is designed, connected to a PCB circuit board by means of a back part, so that each electrical device can independently feed back circuit data to the central processing unit, thereby ensuring electrical safety.

## Description

### BACKGROUND

The disclosure relates to the field of intelligent distribution box technology, and more particularly, to an intelligent distribution box and a signal transmission method therefor.

With the increasing prevalence of electrical appliances in the consumer market, while bringing convenience to daily life, they have also introduced potential safety hazards. Proactively ensuring electrical safety has thus become a topic of widespread social concern. Existing methods typically address this issue using circuit breakers, which automatically trip to protect the circuit in the event of a short circuit or overload. However, by the time a short circuit or overload occurs, the safety risk has already manifested, and the tripping of the circuit breaker cannot eliminate this underlying risk. Consequently, an intelligent distribution box has been developed. This solution connects traditional circuit breakers to a central processing unit via data lines, enabling the central processor to proactively analyze circuit data for enhanced protection. Conceptually, this approach provides a better safeguard for electrical safety.

### SUMMARY

In practice, however, a distribution box typically contains a plurality of electrical components, including circuit breakers. While the electrical components need to be electrically connected, they also require data connection. To avoid an overly complex wiring arrangement, adjacent electrical components are often connected in series for data transmission. The drawback of this approach is that if any one of the electrical components experiences poor contact or disconnection, data information from all subsequent electrical components cannot be transmitted back to the central processing unit. Consequently, the central processing unit is unable to provide protection for those electrical components from which no data information is received. Therefore, there is an urgent need for those skilled in the art to solve the technical problem of how to ensure stable and reliable data transmission between each electrical component and the central processing unit.

To solve the above-mentioned technical problem, the disclosure proposes an intelligent distribution box. By designing a novel structure for various electrical components, including circuit breakers, an inner concave end surface thereof, which is connected to a rail, can be connected to a circuit board installed in a groove of the rail, where power lines and data lines are embedded in the circuit board. Consequently, each electrical component can independently feed back circuit data to a central processing unit, thereby ensuring electrical safety.

To achieve the above object, the following technical solutions are adopted.

One object of the disclosure is to provide an intelligent distribution box, comprising a plurality of electrical components, the electrical components at least comprising: a common power supply module configured to provide an operating power supply for electronic circuits of the respective electrical components; a main incoming intelligent circuit breaker configured for connection of an external mains power and for distribution of an internal mains power; at least one branch intelligent circuit breaker connected to the main incoming intelligent circuit breaker; a central processing unit connected to the main incoming intelligent circuit breaker and the at least one branch intelligent circuit breaker, the central processing unit being configured to receive and process circuit data fed back from the main incoming intelligent circuit breaker and the at least one branch intelligent circuit breaker, and to send execution instructions to the main incoming intelligent circuit breaker and the at least one branch intelligent circuit breaker; and at least one standard rail fixed in the distribution box for mounting the electrical components, characterized by further comprising:
at least one printed circuit board (PCB) disposed in a groove of the standard rail, the at least one PCB being embedded with a plurality of parallel printed conductors, the plurality of parallel printed conductors at least comprising a set of power lines and a set of data lines, for achieving parallel connection of circuits and/or data lines among the respective electrical components;
a spring contact piece for connecting each electrical component to the parallel printed conductors on the at least one PCB;
a through slot located on a rail-connecting groove of each electrical component connected to the standard rail, the through slot being configured such that after one end of the spring contact piece is connected to an interior of the electrical component, the other end passes through the through slot to contact the parallel printed conductors on the at least one PCB; and
a processor disposed inside each electrical component, the processor being configured to transmit processed circuit data of the respective electrical component to the central processing unit via a data line, and to process an instruction issued by the central processing unit and transmit the instruction to the respective electrical component.

Furthermore, the intelligent distribution box further comprises a plastic supporting tray installed in the groove of the standard rail for providing support to the PCB.

Furthermore, the PCB is provided with a connector at each of two ends thereof; lines on the connector completely correspond to the parallel printed conductors on the PCB, and the connector is configured to connect the parallel printed conductors of two PCBs.

Furthermore, the intelligent distribution box further comprises a plug; the plug is connected to the connector for realizing the connection between the PCBs on the same row.

Furthermore, when the intelligent distribution box comprises at least two rows of standard rails for placing electrical components, the intelligent distribution box further comprises a flexible cable harness, and the flexible cable harness is connected to the connector, for achieving communication between the PCBs on respective rows.

Furthermore, the intelligent distribution box further comprises a network communication module; the network communication module is connected to the central processing unit, for the central processing unit to transmit circuit data to an external device and for communication connection to receive an external instruction.

Furthermore, the circuit data at least comprises current data, voltage data, temperature data, and operating state data.

The disclosure also provides a signal transmission method for an intelligent distribution box, performed by an intelligent circuit breaker, the method comprising:
transmitting circuit data of the intelligent circuit breaker itself to a central processing unit in real time; and
receiving a control instruction issued by the central processing unit and executing a corresponding action according to the control instruction.

Furthermore, the control instruction at least comprises an opening instruction and a closing instruction; and the corresponding action at least comprises executing an opening action and executing a closing action.

In another aspect, the disclosure provides a signal transmission method for an intelligent distribution box, performed by a central processing unit, the method comprising:
receiving circuit data fed back from respective electrical components and transmitting the circuit data of the respective electrical components to an external control terminal; and
receiving a control instruction issued by the external control terminal, and issuing the control instruction to a corresponding electrical component.

The beneficial effects of the present invention are as follows: by designing a PCB circuit board, the circuit and data lines can be integrated therein and placed in the groove of the standard rail; and by redesigning the structure of electrical components such as circuit breakers, a slot is opened on the inner concave end surface (rail-connecting groove) thereof connected to the rail, so that a spring contact piece, after being connected to the electrical component such as a circuit breaker, can be connected to the PCB circuit board through the slot. Furthermore, a processor for data processing is added to each electrical component, thereby enabling the common power supply module to provide power to each electrical component, and enabling the circuit data of each electrical component to be processed by the processor and then fed back to the central processing unit via the data line. When the central processing unit determines that a certain electrical component may have a potential safety hazard, it issues a control instruction such as an opening instruction or a closing instruction. Each electrical component performs data exchange with the central processing unit via the PCB circuit board in a parallel connection, without affecting one another, thereby ensuring stable and reliable connection and guaranteeing electrical safety. Additionally, when the distribution box comprises multiple rows of circuit breakers, the PCB circuit boards in each row of circuits can be connected in series via connectors and a flexible cable harness, thereby ensuring that all circuit breakers in the entire distribution box can independently perform data exchange with the central processing unit. Moreover, the central processing unit can further transmit data to an external control terminal via a network communication module and receive instructions issued by the external control terminal to control each electrical component, thereby providing multiple safety guarantees for data analysis and processing. Alternatively, the external control terminal can directly issue a mandatory control instruction to the central processing unit to control the operation of each electrical component, thereby multiply protecting electrical safety.

### BRIEF DESCRIPTION OF THE DRAWINGS

FIG. 1 shows a structural schematic diagram of an intelligent distribution box according to the present invention;
FIG. 2 shows another structural schematic diagram of an intelligent distribution box according to the present invention;
FIG. 3 shows a structural schematic diagram of a PCB and a connector of the intelligent distribution box according to the present invention;
FIG. 4 shows a structural schematic diagram of a plastic supporting tray of the intelligent distribution box according to the present invention;
FIG. 5 shows a structural schematic diagram of a back side of an electrical component of the intelligent distribution box according to the present invention;
FIG. 6 shows a structural schematic diagram of a spring contact piece of the intelligent distribution box according to the present invention;
FIG. 7 shows an enlarged cross-sectional view of a connection portion of an electrical component of the intelligent distribution box according to the present invention;
FIG. 8 shows a flowchart of a signal transmission method for an intelligent distribution box according to the present invention; and
FIG. 9 shows another flowchart of the signal transmission method for the intelligent distribution box according to the present invention.

In the drawings, the following reference numbers are used: 1. Standard Rail; 2. Common Power Supply Module; 3. Main Incoming Intelligent circuit breaker; 4. Branch Intelligent circuit breaker; 5. PCB (Printed Circuit Board); 6. Spring Contact Piece; 7. Through Slot; 8. Plastic Supporting Tray; 9 .Connector; 10. Flexible Cable Harness; 11. Plug.

### DETAILED DESCRIPTION

The technical solutions in the embodiments of the present invention will be described clearly and completely hereinafter with reference to the accompanying drawings in the embodiments of the present invention. Apparently, the described embodiments are merely a part, rather than all, of the embodiments of the present invention. All other embodiments obtained by a person of ordinary skill in the art based on the embodiments of the present invention without creative efforts shall fall within the protection scope of the present invention.

The structures, proportions, sizes, and the elements shown in the accompanying drawings of this specification are merely intended to cooperate with the contents disclosed in the specification for the understanding and reading of those skilled in the art, and are not intended to limit the implementable conditions of the present invention, thus having no substantial technical significance. Any modifications to the structures, changes in the proportional relationships, or adjustments to the sizes, without affecting the effects and objectives achievable by the present invention, shall still fall within the scope covered by the technical contents disclosed in the present invention. Meanwhile, terms such as "upper", "lower", "left", "right", "front", "rear", "middle", and "a" used in this specification are merely intended for clarity of description, and are not intended to limit the implementable scope of the present invention. Changes or adjustments to the relative relationships thereof, without substantially altering the technical contents, shall also be regarded as falling within the scope in which the present invention can be implemented.

It should be particularly noted that the full name of PCB is Printed Circuit Board, which is also referred to as printed circuit board or printed wiring board, and is a component commonly used by those skilled in the electrical art.

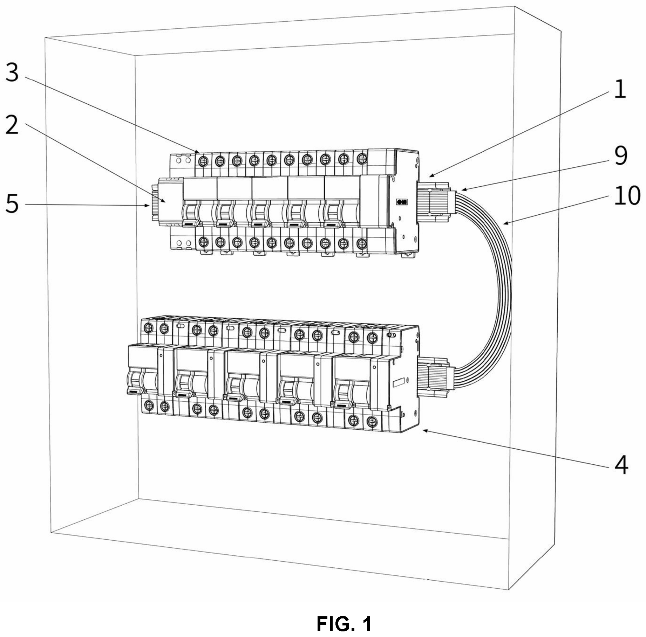

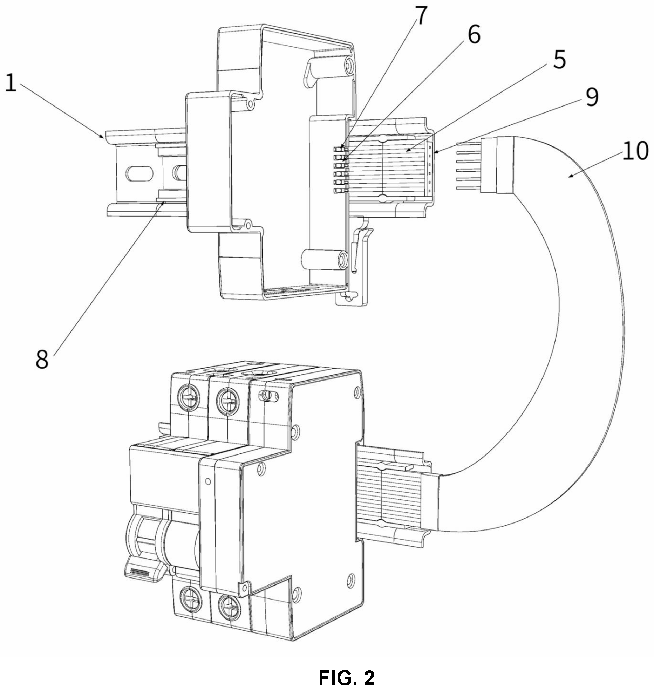

As shown in FIGS. 1-2, an intelligent distribution box is provided.

The intelligent distribution box comprises a plurality of electrical components. The electrical components at least include a common power supply module 2 configured to provide an operating power supply for electronic circuits of the respective electrical components; a main incoming intelligent circuit breaker 3 configured for connection of external mains power and for distribution of internal mains power; at least one branch intelligent circuit breaker 4 connected to the main incoming intelligent circuit breaker 3; a central processing unit (CPU) (not shown) connected to the main incoming intelligent circuit breaker 3 and the branch intelligent circuit breaker 4, where the CPU is configured to receive and process circuit data fed back from the main incoming intelligent circuit breaker 3 and the branch intelligent circuit breaker 4, and to send execution instructions to the main incoming intelligent circuit breaker 3 and the branch intelligent circuit breaker 4; and at least one standard rail 1 fixed in the distribution box for mounting the electrical components.

Optionally, the intelligent distribution box further comprises a network communication module (not shown). The network communication module is connected to the central processing unit (CPU), and is configured for the CPU to transmit circuit data to an external device and to receive external instructions via communication connection.

It should be noted that the standard rail 1 is a metal rail commonly used in distribution boxes for mounting electrical components such as circuit breakers, and its dimensions are typically standard and well known to those skilled in the art. The common power supply module 2 is configured to provide power for the operation of the respective electrical components, and is generally a DC power supply. One end of the main incoming intelligent circuit breaker 3 is connected to an external AC power source, and then distributes the power to each branch intelligent circuit breaker 4. Each branch intelligent circuit breaker 4 is typically connected directly to a load. The central processing unit (CPU) is generally a chip, and the CPU and the network communication module are typically installed in an electrical housing.

Furthermore, in one embodiment, there is no distinction between a main incoming circuit breaker and branch circuit breakers. The external lines are directly connected to the respective circuit breakers, or the distribution box contains only one circuit breaker. Both scenarios are applicable to the present solution.

The intelligent distribution box further comprises at least one PCB (Printed Circuit Board) 5 disposed in a groove of the Standard rail 1. The PCB 5 is embedded with a plurality of parallel printed conductors, at least including a set of power lines and a set of data lines, for achieving parallel connection of circuits and/or data lines among the respective electrical components.

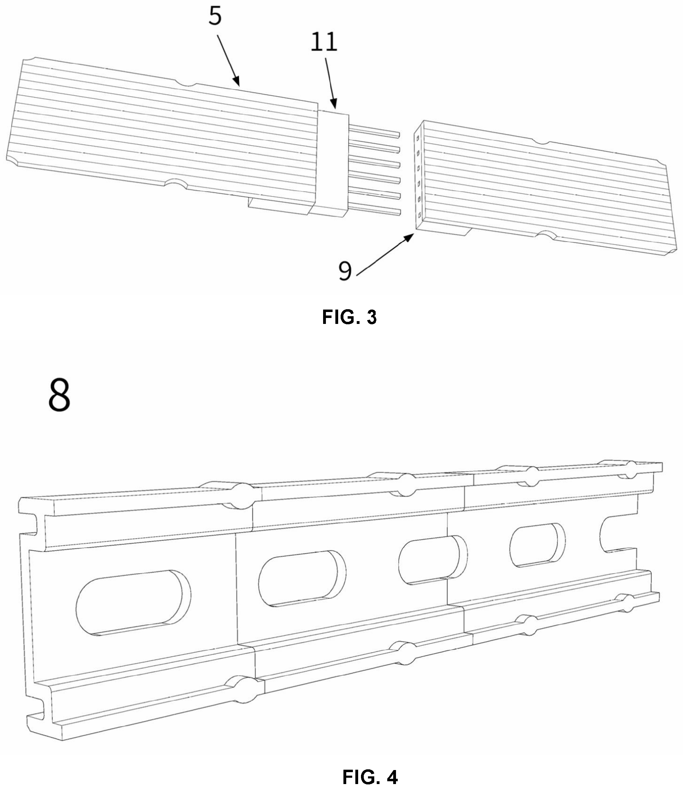

Optionally, the PCB 5 is typically of a standard size, and is provided with a connector 9 at each of its two ends, as shown in FIG. 3. The lines on the connector 9 completely correspond to the parallel printed conductors on the PCB 5. Therefore, in one embodiment, when the length of the electrical components mounted on the Standard rail 1 exceeds the length dimension of the PCB 5, the PCBs on the same row can be connected by connecting the connectors 9 with a plug 11, thereby achieving communication between the PCBs on the same row. Arbitrarily, in one embodiment, the distribution box is equipped with several rows of Standard rails 1, and each Standard rail 1 is mounted with electrical components that need to be connected. In this case, a flexible cable harness 10 can be used to connect in series the PCBs 5 on the respective rows of Standard rails 1, thereby ensuring that all electrical components connected to the PCBs 5 can communicate with the central processing unit (CPU).

It should be noted that the intelligent distribution box further comprises a plastic supporting tray 8, as shown in FIG. 4, installed in the groove of the Standard rail 1 for providing support to the PCB 5.

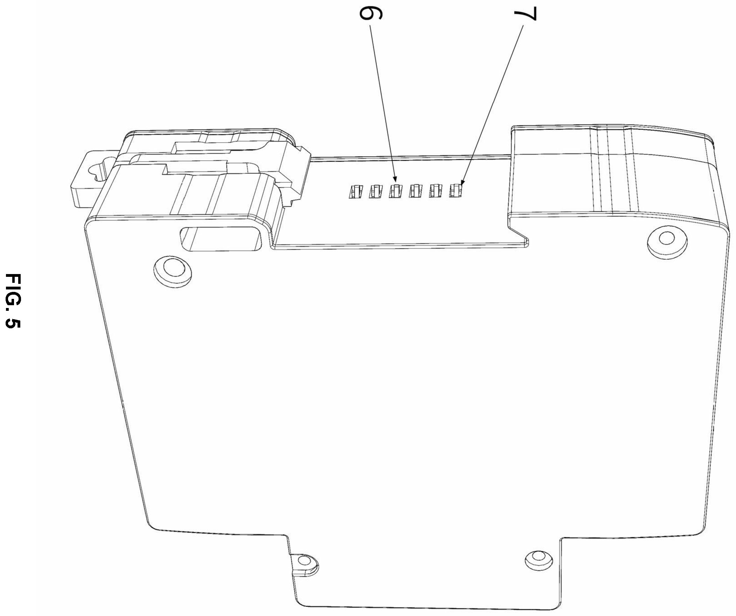

As shown in FIGS. 5-7, the intelligent distribution box further comprises:
a spring contact piece 6 used for connecting each electrical component to the parallel printed conductors on the PCB.

It should be noted that the number of spring contact pieces 6 is generally equal to the total number of circuits and/or data lines on the PCB 5. For example, in one embodiment, if the PCB 5 is embedded with two power lines and four data lines, the electrical component should also be provided with six spring contact pieces.

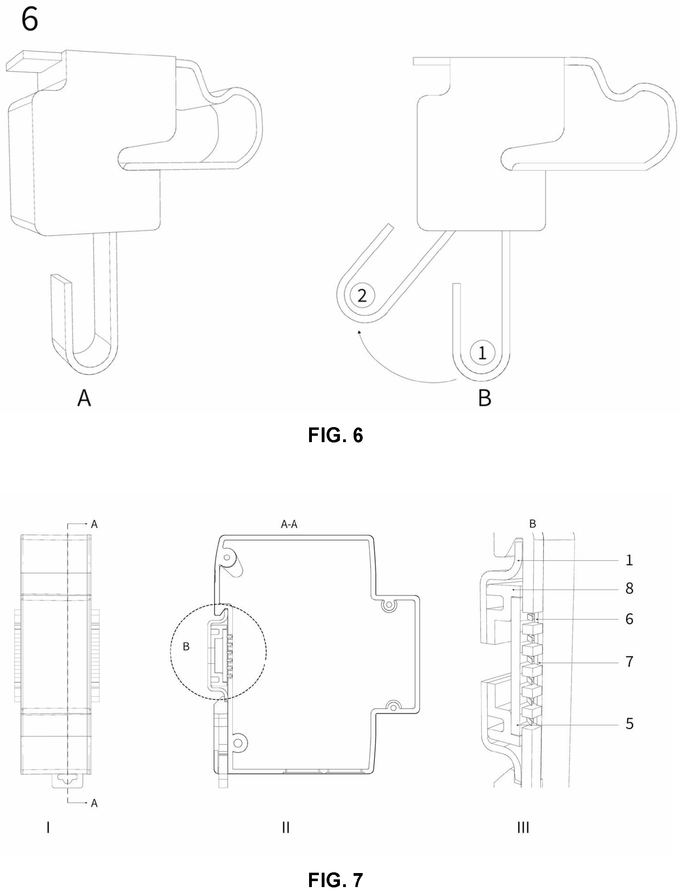

It should be further noted that, as shown in picture B in FIG. 6, the spring contact piece 6 is in a state ① during installation. When the electrical component is mounted on the Standard rail 1, the spring contact piece 6 is compressed and assumes a state ②. At this time, the spring contact piece 6 closely contacts the PCB 5, and the elastic pressure of the spring contact piece 6 itself enables the electrical component and the PCB 5 to maintain circuit connection at all times.

The intelligent distribution box further comprises a through slot 7 located on a rail-connecting groove of each electrical component connected to the Standard rail. The through slot 7 is configured such that after one end of the spring contact piece 6 is connected to the interior of the electrical component, the other end passes through the through slot 7 to contact the parallel printed conductors on the PCB.

It should be noted that, generally, the inner concave end surface of an electrical component connected to the Standard rail 1 is referred to as the rail-connecting groove. In existing electrical components, the rail-connecting groove is not provided with a slot. To enable the electrical component to connect to the PCB 5 located on the Standard rail 1, it is necessary to open a through slot 7 on the inner concave end surface of the electrical component connected to the Standard rail 1. That is, traditional electrical components cannot be applied to the present solution. Generally, the number of through slots 7 corresponds to the number of spring contact pieces 6. For example, in one embodiment, if an electrical component is equipped with six spring contact pieces, it should be provided with six through slots 7. Of course, depending on usage requirements, one long slot may alternatively be opened on the electrical component for installing and passing the six spring contact pieces, or two long slots may be opened according to the power lines and data lines.

It should be noted that, to be applied to the present solution, all electrical component modules installed in the present solution need to be provided with through slots 7 and spring contact pieces 6 to achieve circuit connection and data exchange, such as circuit breakers, controllers, switches, and the like.

The intelligent distribution box further comprises a processor (not shown), disposed inside each electrical component, configured to transmit the processed circuit data from each electrical component to the central processing unit via a data line, and to process instructions issued by the central processing unit and transmit them to each electrical component.

In one embodiment, the processor is mainly installed inside the main incoming intelligent circuit breaker 3 and the branch intelligent circuit breaker 4, and is a data conversion unit for data exchange between each circuit breaker and the central processing unit. The processor has at least the capability of encoding and decoding, encodes all circuit data such as current data, voltage data, temperature data, and operating state data in each circuit breaker, and then transmits the encoded data to the central processing unit. Simultaneously, the processor can decode digital instructions issued by the central processing unit and control each circuit breaker to execute corresponding actions according to the control instructions.

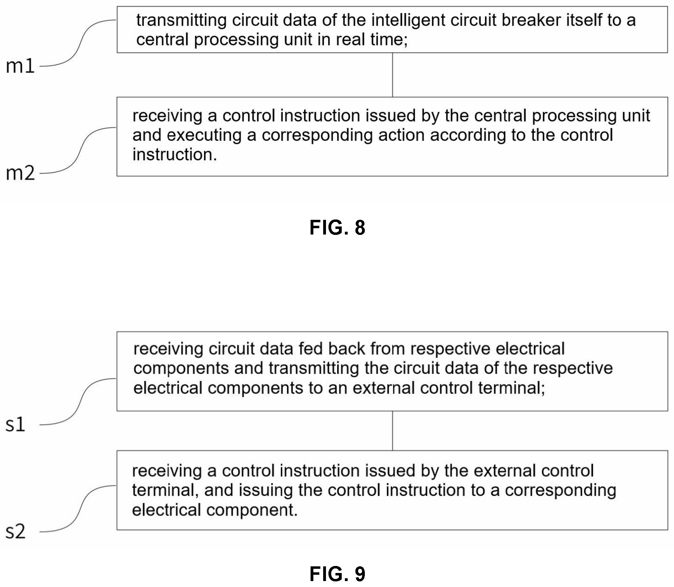

As shown in FIG. 8,
provided is a signal transmission method for an intelligent distribution box, performed by an intelligent circuit breaker, the method comprising:
step m1: transmitting circuit data of the intelligent circuit breaker itself to a central processing unit in real time; and
step m2: receiving a control instruction issued by the central processing unit and executing a corresponding action according to the control instruction.

Further, the control instruction at least comprises an opening instruction and a closing instruction; and the corresponding action at least comprises executing an opening action and executing a closing action.

As shown in FIG. 9,
provided is a signal transmission method for an intelligent distribution box, performed by a central processing unit, the method comprising:
step s1: receiving circuit data fed back from respective electrical components and transmitting the circuit data of the respective electrical components to an external control terminal; and
step s2: receiving a control instruction issued by the external control terminal, and issuing the control instruction to a corresponding electrical component.

It will be obvious to those skilled in the art that changes and modifications may be made, and therefore, the aim in the appended claims is to cover all such changes and modifications.

## Claims

1. An intelligent distribution box, comprising a plurality of electrical components, the electrical components at least comprising: a common power supply module configured to provide an operating power supply for electronic circuits of the respective electrical components; a main incoming intelligent circuit breaker configured for connection of an external mains power and for distribution of an internal mains power; at least one branch intelligent circuit breaker connected to the main incoming intelligent circuit breaker; a central processing unit connected to the main incoming intelligent circuit breaker and the at least one branch intelligent circuit breaker, the central processing unit being configured to receive and process circuit data fed back from the main incoming intelligent circuit breaker and the at least one branch intelligent circuit breaker, and to send execution instructions to the main incoming intelligent circuit breaker and the at least one branch intelligent circuit breaker; and at least one standard rail fixed in the distribution box for mounting the electrical components, **characterized by** further comprising:
at least one printed circuit board (PCB) disposed in a groove of the standard rail, the at least one PCB being embedded with a plurality of parallel printed conductors, the plurality of parallel printed conductors at least comprising a set of power lines and a set of data lines, for achieving parallel connection of circuits and/or data lines among the respective electrical components;
a spring contact piece for connecting each electrical component to the parallel printed conductors on the at least one PCB;
a through slot located on a rail-connecting groove of each electrical component connected to the standard rail, the through slot being configured such that after one end of the spring contact piece is connected to an interior of the electrical component, the other end passes through the through slot to contact the parallel printed conductors on the at least one PCB; and
a processor disposed inside each electrical component, the processor being configured to transmit processed circuit data of the respective electrical component to the central processing unit via a data line, and to process an instruction issued by the central processing unit and transmit the instruction to the respective electrical component.

2. The intelligent distribution box of claim 1, **characterized in that** the intelligent distribution box further comprises a plastic supporting tray installed in the groove of the standard rail for providing support to the PCB.

3. The intelligent distribution box of claim 1, **characterized in that** the PCB is provided with a connector at each of two ends thereof; lines on the connector completely correspond to the parallel printed conductors on the PCB, and the connector is configured to connect the parallel printed conductors of two PCBs.

4. The intelligent distribution box of claim 3, **characterized in that** the intelligent distribution box further comprises a plug; the plug is connected to the connector for realizing the connection between the PCBs on the same row.

5. The intelligent distribution box of claim 3, **characterized in that** when the intelligent distribution box comprises at least two rows of standard rails for placing electrical components, the intelligent distribution box further comprises a flexible cable harness, and the flexible cable harness is connected to the connector, for achieving communication between the PCBs on respective rows.

6. The intelligent distribution box of claim 1, **characterized in that** the intelligent distribution box further comprises a network communication module; the network communication module is connected to the central processing unit, for the central processing unit to transmit circuit data to an external device and for communication connection to receive an external instruction.

7. The intelligent distribution box of claim 1, **characterized in that** the circuit data at least comprises current data, voltage data, temperature data, and operating state data.

8. A signal transmission method for an intelligent distribution box, performed by an intelligent circuit breaker, the method comprising:
transmitting circuit data of the intelligent circuit breaker itself to a central processing unit in real time; and
receiving a control instruction issued by the central processing unit and executing a corresponding action according to the control instruction.

9. The method of claim 7, **characterized in that** the control instruction at least comprises an opening instruction and a closing instruction; and the corresponding action at least comprises executing an opening action and executing a closing action.

10. A signal transmission method for an intelligent distribution box, performed by a central processing unit, the method comprising:
receiving circuit data fed back from respective electrical components and transmitting the circuit data of the respective electrical components to an external control terminal; and
receiving a control instruction issued by the external control terminal, and issuing the control instruction to a corresponding electrical component.
